# EUROPÄISCHE PATENTSCHRIFT

(11) **EP 4 388 205 B1**
(45) Veröffentlichungstag und Bekanntmachung des Hinweises auf die Patenterteilung: **11.06.2025**
(21) Anmeldenummer: 21783390.4
(22) Anmeldetag: 18.08.2021
(51) Int. Cl.: F15B 15/14, B21D 28/28

(54) **ZYLINDERROHRBAUGRUPPE UND VERFAHREN ZU DEREN HERSTELLUNG**
CYLINDER PIPE ASSEMBLY AND METHOD FOR PRODUCING SAME
ENSEMBLE TUBE DE VÉRIN ET PROCÉDÉ POUR LE PRODUIRE

(43) Veröffentlichungstag der Anmeldung: 26.06.2024
(73) Patentinhaber: Bümach Engineering International B.V., 7826 TA Emmen (NL)
(72) Erfinder: BUETER, Josef, 49733 Haren/Altenberge (DE)
(74) Vertreter: Weihrauch, Frank
(86) Internationale Anmeldenummer: PCT/DE2021/000136
(87) Internationale Veröffentlichungsnummer: WO 2023/020642

(56) Entgegenhaltungen:
- EP-A1- 2 952 751
- DE-A1- 2 060 383
- DE-A1- 3 924 206
- JP-A- S53 113 954

## Beschreibung

Die Erfindung betrifft eine Zylinderrohrbaugruppe, insbesondere die Verbindung eines Zylinderrohrs mit einem Anschlussstutzen, sowie ein Verfahren zu deren Herstellung.

Der Stand der Technik beschreibt verschiedene Verbindungsmöglichkeiten eines Anschlussstutzens mit einem Zylinderrohr. Zum einen kommen Schraubverbindungen in Frage, zum anderen sind stoffschlüssige Verbindungen, wie durch Schweißen, bekannt.

Eine Schraubverbindung ist meist so ausgeführt, dass im Zylinderrohr ein Innengewinde und am Anschlussstutzen ein passendes Außengewinde vorhanden ist. Das Innengewinde im Zylinderrohr ist zumeist als radiale Bohrung orthogonal zur Zylinderachse eingebracht. Der Nachteil dieser Lösung ist, dass der Einschraubbereich am Zylinderrohr eine Mindestgewindetiefe für eine ausreichende mechanische Festigkeit der Gewindeverbindung aufweisen muss. Dadurch muss der Bereich des Zylinderrohrs eine große Wandstärke aufweisen oder aufwändig bearbeitet werden. Eine große Wandstärke ist zudem für eine materialeffiziente Ausbildung kontraproduktiv.

Alternativ kann der Anschlussstutzen direkt mit dem Zylinderrohr verschweißt werden. Dabei kommen die üblichen Schweißverfahren, wie beispielsweise WIG, MAG oder Laserschweißen in Betracht. Zumeist wird ein Schweißzusatzstoff zugeführt, um die durch die Außenkrümmung des Zylinderrohrs bestehenden Fügespalte zu überbrücken. Alternativ ist es bekannt, die Außenkrümmung abzufräsen, was jedoch nachteilig mit einer örtlichen Querschnittsschwächung des Zylinderrohrs verbunden ist. Nachteilig wirkt bei den genannten Schweißverfahren zudem der hohe Wärmeeintrag in das Zylinderrohrmaterial. Dadurch kommt es zu Gefügeveränderungen, die die Festigkeit nachteilig beeinflussen. Zudem besteht die Gefahr von ungewollten Verformungen des Zylinderrohrs in diesem Abschnitt.

Nachteilig ist ebenso, dass die Bohrungen bzw. Gewinde für den Druckmittelanschluss oder den Druckmitteldurchfluss zerspanend durch Bohren oder Fräsen hergestellt werden. Die entstehenden Späne und Stäube können sich im Zylinderinnenraum festsetzen und im späteren Betrieb des Arbeitszylinders das Öl und weitere Peripherie, wie Ventile oder Ähnliches, verschmutzen. Um dies zu vermeiden, muss eine aufwändige Reinigung durchgeführt werden.

Zudem ist es bei allen vorstehend aufgeführten bekannten Lösungen nachteilig, dass die Durchtrittstelle der Bohrung zum Zylinderinnenmantel eine Kontur ausbildet, die zu einem erhöhten Verschleiß von Dichtungen oder Führungen am Kolben führt oder die zur Vermeidung solcher unerwünschten Wirkungen aufwändig nachbearbeitet werden muss.

Ferner ist aus der Druckschrift JP S53 113954 A eine Lösung bekannt, bei der das Zylinderrohr eine gestanzte Lochung als Anschlussbohrung aufweist, wobei dort innenseitig im Zylinderrohr eine konkave Einwölbung eingeprägt ist. Nachteilig führt die Einwölbung an dem Zylinderrohr zu einer korrespondierenden außenseitigen Auswölbung, so dass der Anschlussstutzen mit einer Randwulst verstehen werden muss, um diesen an der Außenmantelseite des Zylinderrohrs aufschweißen zu können.

Aufgabe der Erfindung ist es, unter Überwindung der Nachteile des Standes der Technik eine qualitativ hochwertige und hochbelastbare Zylinderrohrbaugruppe aus einem Zylinderrohr mit daran angeordnetem Anschlussstutzens aufzuzeigen, die ferner zeitsparend und kostengünstig herstellbar ist

Die Aufgabe wird in Bezug auf die Zylinderrohrbaugruppe durch die im Patentanspruch 1 aufgeführten Merkmale und in Bezug auf das Verfahren zu deren Herstellung durch die im Patentanspruch 7 aufgeführten Merkmale gelöst. Bevorzugte Weiterbildungen ergeben sich aus den jeweiligen Unteransprüchen.

Die Zylinderrohrbaugruppe weist als Grundkomponenten ein Zylinderrohr und einen Anschlussstutzen auf.

Als Zylinderrohr wird jeder hohlzylindrische Mantel einer hydraulischen oder pneumatischen Baugruppe verstanden, wobei es sich bevorzugt um ein Zylinderrohr eines hydraulischen Arbeitszylinders oder um ein Zylinderrohr eines hydraulischen Ventils, insbesondere eines hydraulischen Stellventils oder Rückschlagventils handelt.

Soweit es sich um ein Zylinderrohr eines hydraulischen Arbeitszylinders handelt, ist in dem Zylinderrohr axial verschieblich die Kolbeneinheit angeordnet. Damit sich die Kolbeneinheit im Gehäuse bewegt, wird das Zylinderrohr mit einem Druckmittel beaufschlagt. Gemäß der erfindungsgemäßen Zylinderrohrbaugruppe wird das Druckmittel seitlich durch das Zylinderrohr ein- oder ausgeleitet.

Erfindungsgemäß weist das Zylinderrohr einen Zylindergrundkörper und einen Anschlussabschnitt auf.

Als Zylindergrundkörper wird die rohrförmige Grundstruktur des Zylinderrohrs verstanden.

Über den Anschlussabschnitt als ein Teil des Zylinderrohrs wird das Fluid in den durch das Zylinderrohr gebildeten Druckmittelarbeitsraum, auch bezeichnet als Zylinderrinnenraum, geführt. Der Anschlussabschnitt wiederum weist eine Außenmantelkalotte, die an einem Zylinderrohraußenmantel, und eine Innenmantelkalotte, die an einem Zylinderrohrinnenmantel angeordnet ist, auf. Die Außenmantelkalotte und die Innenmantelkalotte werden zusammengefasst auch als die Kalotten bezeichnet.

Die erfindungsgemäße Zylinderrohrbaugruppe ist insbesondere dadurch gekennzeichnet, dass die Kalotten als kaltgeformte konkave Prägeformabschnitte ausgebildet sind und eine Gefügeverfestigungszone in einem Formungsbereich zwischen den Kalotten bilden.

Geometrisch handelt es sich bei den Kalotten um gegenüber der übrigen Oberflächenkontur des Zylinderrohraußenmantels und des Zylinderrohrinnenmantels konkav ausgebildete Formabschnitte, die somit einen Rücksprung ausbilden und vorzugsweise kugelabschnittförmig oder ovalisiert ausgebildet sind.

Die Gefügeverfestigung der Gefügeverfestigungszone bildet vorteilhaft einen mechanisch stabileren Bereich aus, indem durch die Prägeformung der Kalotten das Material des Zylinderrohrs dort kaltgeformt in seinem Gefüge verbessert ist.

Zudem weist der Anschlussabschnitt eine Anschlusslochung auf, die für einen Druckmitteldurchtritt eines Druckmittels durch das Zylinderrohr je nach Betriebszustand für einen Druckmitteleintritt oder Druckmittelaustritt ausgebildet ist. Die Anschlusslochung ist erfindungsgemäß als Stanzlochung ausgeführt und durchsetzt die beiden Kalotten und das dazwischen liegende Zylinderrohr. Über die Lochung kann das Arbeitsdruckmittel in den Zylinderinnenraum geleitet werden.

Die erfindungsgemäße Lösung ist weiterhin insbesondere dadurch gekennzeichnet, dass die Anschlusslochung von der Gefügeverfestigungszone umschlossen wird.

Der kritische Bereich der Druckmitteleinleitung und des Druckmittelanschlusses bietet dadurch eine höhere mechanische Festigkeit.

Der Anschlussstutzen ist an dem Anschlussabschnitt angeordnet und weist einen Druckmitteltubus auf. Dieser ist für eine Druckmittelleitung des Druckmittels ausgebildet.

Ein Druckmittelanschluss des Anschlussstutzens, beispielsweise als Gewindeabschnitt ausgebildet, bietet die Möglichkeit einen Druckmittelschlauch mit dem Anschlussstutzen und mittelbar mit dem Zylinder zu verbinden und so das Druckmittel zuzuführen oder auszuleiten. Je nach Einbausituation und Betriebszustand kann ein solcher Druckmittelschlauch bei dynamischen Bewegungen des Zylinders verformt werden, so dass dieser eine mechanische Belastung auf das Anschlussstück und mittelbar auf das Zylinderrohr in dem durch die Lochung ohnehin zwangsläufig geschwächten Bereich ausübt. Durch die Gefügeverfestigung ist hier eine langlebigere und höher belastbare Anschlussmöglichkeit gegeben.

Zudem weist der Anschlussabschnitt einen Verbindungsabschnitt auf, der eine ringförmige axiale Begrenzungskontur aufweist, die den Druckmittelkanal umschließt.

Ferner weist auch die Außenkalotte eine ebenfalls ringförmige Kontur auf, die zu der ringförmigen axialen Begrenzungskontur des Anschlussstutzens eine ringförmige Gegenringfläche darstellt.

Die erfindungsgemäße ringförmige axiale Begrenzungskontur und die ringförmige Gegenfläche der Außenkalotte bilden eine ringförmige Berührungskontaktfläche aus. Vorteilhaft ist hierbei die ringförmige Berührungskontaktfläche praktisch spaltfrei. Durch den ringförmigen Berührungskontakt und die kalottenförmige Einprägung, kann das Aufsetzen des Anschlussstutzens mit einer hohen Toleranz erfolgen und trotzdem ist eine dichtende Auflage möglich. Insbesondere bei einer kugeloberflächenabschnittsförmigen Außenkalotte stellt sich auch bei einer gewissen Winkelabweichung des Anschlussstutzens von einem idealen Radius zu der Zylinderrohrlängsachse stets eine praktisch spaltfreie ringförmige Berührungskontaktfläche ein.

Das Zylinderrohr und der Anschlussstutzen sind an der ringförmigen Berührungskontaktfläche mittels einer Ringschweißnaht stoffschlüssig miteinander verbunden. Das Zylinderrohr und der Anschlussstutzen werden nachfolgend zusammengefasst auch als die Fügepartner bezeichnet. Die Ringschweißnaht bildet zugleich die Dichtebene aus.

Ferner bilden der Druckmitteltubus und die Anschlusslochung als Druckmitteldurchtritt durch die Zylinderwandung einen gemeinsamen Druckmittelkanal aus.

Mit der erfindungsgemäßen Zylinderrohrbaugruppe wurde überraschend eine Lösung gefunden, die unter den nachfolgend näher beschriebenen vorteilhaften Aspekten eine Vielzahl von Problemen aus dem Stand der Technik technologisch einfach und zuverlässig löst.

Vorteilhaft ist, dass die erfindungsgemäße Zylinderrohrbaugruppe durch eine zerspanungsfreie Fertigung erhalten wird, so dass keine Späne entstehen, die in den Zylinderinnenraum gelangen und dort Schäden bewirken können. Somit werden die Sauberkeit und die Qualität in der Fertigung gesteigert.

Weiterhin ist es vorteilhaft, dass eine Gratbildung an der Anschlusslochung durch das zweiseitige Prägen ausgeschlossen wird. Hierdurch entfällt insbesondere ein sonst erforderliches Nacharbeiten zur Gratentfernung. Auch die bei einer Nachbearbeitung häufig verbleibenden Schleifkrater werden vermieden. Es liegt vorteilhaft eine glatte Wandung an der Anschlusslochung vor, so dass die Druckmittelströmung nicht gestört wird und homogen und geräuscharm erfolgen kann.

In diesem Zusammenhang besteht auch der Vorteil, dass auch der Übergang zwischen der Zylinderinnenmantelfläche und der Innenkalotte aufgrund der Prägeformung ohne Zusatzmaßnahmen gratfrei ist. Auf diese Weise ist vorteilhaft auch die Durchtrittsstelle der Anschlusslochung zur Innenkalotte etwas gegenüber der Kontur der Zylinderinnenmantelfläche radial zurückgesetzt, so dass empfindliche Bauteile wie Dichtungen oder Führungen am Kolben bei einer Überfahrt besonders geschont werden.

Durch die Prägeformung wird zudem eine vorteilhafte Gefügeveränderung durch Materialverdichtung in der Gefügeverfestigungszone, also in dem Bereich um die Anschlusslochung, bereitgestellt. Dies ist insofern besonders vorteilhaft, als dass durch die Anschlusslochung zwangsläufig eine konstruktive Schwächung der Zylinderrohrwandung vorliegt, die die Beulungsspannung und die axiale Zugspannung um die Anschlusslochung verteilen muss. Zudem können je nach Verwendung auch Biegekräfte über das Anschlussstück eingetragen werden. Durch die vorteilhafte Gefügeveränderung wird dieser kritische Bereich verfestigt und kann so die konstruktive Schwächung durch die Anschlussbohrung besser kompensieren.

Ferner wird vorteilhaft mittels der Außenkalotte eine ringförmige Gegenringfläche als Gegenfläche für eine flächenbündige und spaltfreie Anlage des Anschlussstutzens erreicht, so dass optimale Voraussetzungen für eine qualitativ besonders hochwertige und zugleich schweißwerkstofffreie Schweißverbindung geschaffen werden.

Weiterhin besteht der Vorteil, dass die Formen beziehungsweise Konturen von Außenkalotte und Innenkalotte auch voneinander abweichen können, so dass auch Sonderformen wie etwa längserstreckte Innenkalotten zur Ausbildung eines Dämpfungsdruckmittelkanals in der Zylinderinnenmantelfläche ohne Zusatzschritte bereitgestellt werden können.

Weiterhin ist es vorteilhaft, dass die Anschlusslochung, die Gefügeverfestigungszone, die ringförmige Gegenfläche der Außenkalotte sowie die gratfreie Einmündung der Anschlusslochung in die Zylinderinnenmantelfläche in nur einem einheitlichen Arbeitsgang geschaffen werden, so dass eine kostengünstige und effektive Produktion ermöglicht wird.

Durch die Stanzherstellung der Anschlusslochung entsteht ein Pfropfen, auch Butzen genannt, der vorteilhaft als sauberer Kernschrott vollständig wiederverwertet werden kann. Weiterhin ist der Energieverbrauch in der Fertigung für die erfindungsgemäße Stanz-Prägung wesentlich geringer als für die mehrstufigen spanenden Bearbeitungen nach dem Stand der Technik. Zudem fallen vorteilhaft keine verschmutzten Späne an, die aufwändig zu entsorgen wären.

Nach einer vorteilhaften Weiterbildung ist die Zylinderrohrbaugruppe dadurch gekennzeichnet, dass die Zylinderrohrbaugruppe als Teil eines Arbeitszylinders ausgebildet ist.

Besonders bevorzugt handelt es sich bei dieser Weiterbildung um eine Zylinderbaugruppe eines hydraulischen Arbeitszylinders. Dieser ist besonders hohen Belastungen ausgesetzt, so dass die beschriebenen Vorteile der hohen Qualität und Festigkeit besonders wirksam werden. Ein solcher Arbeitszylinder weist die Zylinderrohrbaugruppe und eine Kolbeneinheit auf und wird als linearer Druckstromverbraucher in vielen Anwendungsbereichen eingesetzt.

Nach einer anderen vorteilhaften Weiterbildung ist die Zylinderrohrbaugruppe dadurch gekennzeichnet, dass die Ringschweißnaht als Pressschweißnaht ausgebildet ist.

Die Pressschweißnaht bietet den Vorteil, dass das Gefüge im Umgebungsbereich der Schweißstelle geringer verändert wird als bei anderen Schweißverfahren, insbesondere da der Wärmeeintrag in das Material der Schweißpartner äußerst gering ist.

Die vorteilhafte Weiterbildung als Pressschweißnaht ist möglich, weil durch die erfindungsgemäße Lösung mit der Bereitstellung der ringförmigen Gegenfläche der Außenkalotte zu der ringförmigen axialen Begrenzungskontur des Anschlussstutzens eine praktisch spaltfreie Berührungskontaktfläche geschaffen wird.

Gemäß einer weiteren vorteilhaften Weiterbildung ist die Zylinderrohrbaugruppe dadurch gekennzeichnet, dass die Ringschweißnaht schweißwerkstofffrei ausgebildet ist. Vorteilhaft ist, dass kein Materialzusatz zum Verschweißen benötigt wird.

Die Verschweißung kann somit vorteilhaft mit einem geringeren Energieeintrag, technologisch einfacher und schneller sowie ohne das Auftreten von Schweißspritzern ausgeführt werden. Zudem treten an der Schweißstelle keine Materialvermischung mit einem zugesetzten Schweißwerkstoff auf, was zu erhöhter Korrosion oder Gefügeverwerfungen führen könnte.

Entsprechend einer nächsten vorteilhaften Weiterbildung ist die Zylinderrohrbaugruppe dadurch gekennzeichnet, dass die Außenmantelkalotte als Kugeloberflächenabschnitt ausgebildet ist.

Durch die Kugelform ist der Gefügeübergang entlang der Zylinderrohrwandung in Richtung der Anschlusslochung als Teil des Druckmittelkanals ein allmählicher Übergang, was Gefügesprünge verhindert. Dadurch werden Rissbildungen oder Dynamikbrüche vermieden.

Zudem weist die Formung der Außenkalotte als Kugeloberflächenabschnitt den Vorteil auf, dass sich geometrisch eine Kreislinie auf die Oberfläche der Außenkalotte aufbeschreiben lässt. Zudem kann die Planebene dieser Kreislinie in unterschiedlichen Winkeln angeordnet sein, so dass eine Ausrichtung des Anschlussstutzens besondere einfach erfolgen kann und hierbei immer eine spaltfreie ringförmige Berührungskontaktfläche erzielt werden kann.

Nach einer anderen vorteilhaften Weiterbildung ist die Zylinderohrbaugruppe dadurch gekennzeichnet, dass die Innenmantelkalotte als Dämpfungsdruckmittelkanal ausgebildet ist.

Diese Weiterbildung bezieht sich auf Dämpfungslösungen, bei denen der Kolben einen Kolbenring aufweist und die Anschlusslochung in dem Zylinderendbereich axial proximal versetzt ist, so dass der Kolben bei der Annäherung an die Endlage mit seinem Kolbenring die Anschlusslochung überfährt und so ein Druckmittelvolumen in dem Zylinderendbereich einschließt.

Überfährt der Kolben mit seinem Kolbenring die Innenmantelkalotte, wird der Druckmittelkanal durch den Kolben nicht vollständig verschlossen. Vielmehr kann in der so ausgebildeten Innenkalotte eine geringe Menge des Druckmittels an dem Kolbenring des Kolbens vorbeiströmen. Dadurch kann eine Dämpfung der Kolbenbewegung erreicht werden. Der Querschnitt des Dämpfungsdruckmittelkanals bestimmt den Grad der Dämpfung und dessen axiale Erstreckung bestimmt den Dämpfungsweg. Durch einen in der axialen Erstreckung veränderlichen Querschnitt kann in einer besonderen Ausbildung ferner eine progressive Dämpfung erreicht werden.

Nach einem weiteren Aspekt der Erfindung wird die Zylinderrohrbaugruppe durch ein nachfolgend näher beschriebenes Herstellungsverfahren erhalten.

Das Verfahren zur Herstellung einer Zylinderrohrbaugruppe ist dadurch gekennzeichnet, dass die Zylinderrohrbaugruppe nach einem der Ansprüche 1 bis 6 ausgebildet ist und folgende Verfahrensschritte aufweist:

### a) Bereitstellen des Zylinderrohrs

Den Ausgangspunkt des Verfahrens bildet ein Zylinderrohr, das durch Ablängen, Drehbearbeitung und gegebenenfalls weiteren Arbeitsschritten aus einem Stangenmaterial erhalten wird.

Das so bereitgestellte Zylinderrohr wird in eine Vorrichtung eingelegt. Die Vorrichtung besteht aus einer Presse, die eine Hubbewegung durchführen kann und einem Werkzeug mit einer definierten Aufnahme für das Rohr. So werden bei einer Serienfertigung die Rohre immer in der gleichen Position eingelegt und die Bearbeitung erfolgt immer an derselben Stelle des Rohrs.

### b) Stanzen der Anschlusslochung und Formen der Kalotten durch Kaltumformung mittels eines Stanz-Form-Stempels und eines Gegenstempels

Der Stanzformstempel weist eine vorzugsweise kugelausschnittförmige Prägekontur und einen zylinderförmigen Schneidstift auf, der den Kugelausschnitt mittig durchdringt. Der Stempel ragt zudem mit mindestens der Länge der einfachen Wandstärke des Zylinderrohrs aus dem Kugelausschnitt heraus.

In der Stanzphase des Verfahrensabschnitts b) dringt die Schneidstempelkontur in das Zylinderrohr ein und stanzt die Anschlusslochung als einen zylinderförmigen Durchbruch ein.

Nach einer Fortsetzung der Bewegung des Stempels prägt in der Prägephase der vorzugsweise kugelförmige Bereich die Außenkalotte in die Zylinderrohraußenseite ein. Der Gegenstempel stellt die Gegenkraft bereit. Hierzu nimmt er die Innenform des Zylinderrohrs auf. Der Gegenstempel weist ebenfalls eine vorzugsweise kugelförmige konvexe Kontur auf und erzeugt so zeitlich mit der Außenkalotte die Innenkalotte. Zudem ist der Gegenstempel mit einem zylindrischen Durchbruch durchsetzt, in den der ausgestanzte Zylinderbutzen und der Schneidstempelabschnitt eintauchen.

Vorteilhaft stützt dabei in der Prägephase der sich noch in der Anschlusslochung befindliche Schneidstempel die Innenwandungen der Anschlusslochung, so dass das sich während der Prägung in der Gefügeverdichtungszone plastisch formende Material des Zylinderrohrs an den Innenwandungen besonders verdichtet wird. Zugleich wird der Öffnungsquerschnitt der Anschlusslochung vor einer Verformung geschützt.

Zudem ist es möglich, im Anschluss an den Verfahrensschritt b) nochmals einen weiteren Prägeschritt mit einem anderen Prägewerkzeug durchzuführen um einen etwaigen Stranzgrat der Anschlusslochung zu beseitigen oder die Kalotten weiter auszuformen.

Nach einem weiteren Aspekt der Erfindung kann der Verfahrensschritt b) auch in zwei Teilabschnitten ausgeführt werden. In einem ersten Teilabschnitt erfolgt mittels eine Stanzstempels die Stanzung der Anschlusslochung und in einem zweiten Teilabschnitt mittels eines Prägestempels die Prägung der Kalotten, wodurch zugleich ein etwaiger Stanzgrat eingedrückt und so beseitigt wird.

In einer vorteilhaften Variante kann der Verfahrensschritte b) bei einem Zylinderrohr das zwei seitliche Druckmittelanschlüsse - jeweils ein Druckmittelanschluss in einem Endbereich - aufweisen soll, auch zugleich für beide Druckmittelanschlüsse gleichzeitig ausgeführt werden, so dass nach diesem Verfahrensschritt ein Zylinderrohr mit dem Anschlussabschnitt an dem einen Endbereich und einem weiteren Anschlussabschnitt an dem weiteren Endbereich bereitgestellt wird. Hierfür weist in dieser Weiterbildung die Presse neben dem Stanzformstempel und dem Gegenstempel einen weiteren Stanzformstempel und einen weiteren Gegenstempel auf. Die beiden Gegenstempel werden beidseitig in dem Zylinderrohrinnenraum dort positioniert, wo der jeweilige Anschlussabschnitt erzeugt werden soll. Dann können beide Stanzformstempel in einem Pressenhub betätigt werden. Dies betrifft insbesondere Zylinderrohrbaugruppen für doppelt wirkende Arbeitszylinder wie Differenzialzylinder oder Gleichgangzylinder.

### c) Positionieren des Anschlussstutzens an der Außenkalotte und Herstellen einer festen Lagebeziehung unter Ausbilden der ringförmigen Berührungskontaktfläche und Erhalten einer Vorbaugruppe

Der Anschlussstutzen wird im Bereich der Außenkalotte mit seiner ringförmigen Berührungskontaktfläche aufgesetzt. Aufgrund der Kombination aus der Form der Außenkalotte und der ringförmigen Berührungskontaktfläche des Anschlussstutzens besteht vorteilhaft beim Positionieren und Aufsetzen eine hohe Winkeltoleranz. Es entsteht immer eine vollumfängliche spaltfreie Auflage der Fügepartnergeometrien, was zu einer homogenen stoffschlüssigen Verbindung nach dem nächsten Verfahrensschritt führt.

### d) Verschweißen des Zylinderrohrs und des Anschlussstutzens unter Herstellung der Ringschweißnaht

Besonders bevorzugt erfolgt das Verschweißen unter Herstellung einer Widerstand-Pressschweißung mit Pressung der Fügepartner.

Das Verschweißen dient der stoffschlüssigen und festen Verbindung des Zylinderrohrs mit dem Anschlussstutzen. Zudem ist die Verbindung druckmitteldicht. Das Verschweißen kann aufgrund der spaltfreien Vorpositionierung der Fügepartnergeometrien in hoher Qualität ausgeführt werden, ohne dass hierfür kostenverursachenden Nachbearbeitungen erforderlich sind.

Es kann nun eine Druckmittelfluidzuführung in Form eines Schlauches oder Rohrs am Zylinderrohr montiert werden. Die Verbindung von Anschlussstutzen und Zylinderrohr bietet zudem genügend Widerstand gegenüber einer dynamischen Belastung, die aus einer Bewegung des Schlauches aufgrund von Druckstößen oder der Zylinderbewegung resultiert.

Wie Verfahrensschritt b) können optional auch die beiden Verfahrensschritte c) oder d) für zwei Anschlussabschnitte simultan ausgeführt werden.

Das Verfahren zur Herstellung einer Zylinderrohrbaugruppe ist in einer vorteilhaften Weiterbildung dadurch gekennzeichnet, dass im Verfahrensschritt b) das Stanzen und Formen mittels eines als gehärteter Kugel ausgebildeten Gegenstempels durchgeführt wird.

Der Gegenstempel weist demzufolge ebenso einen konvexen kugelausschnittförmigen Bereich auf. Dieser prägt sich in die Innenseite des Zylinderrohrs ein und bildet auch hier eine konkave Kalotte aus.

Durch die Ausbildung des Gegenstempels mit einer gehärteten Kugel kann vorteilhaft ein kostengünstiges Prägewerkzeug mit einer hohen Prozessstabilität bereitgestellt werden.

Das Verfahren zur Herstellung einer Zylinderrohrbaugruppe ist nach einer anderen vorteilhaften Weiterbildung dadurch gekennzeichnet, dass im Verfahrensschritt d) das Verschweißen als Widerstands-Pressschweißen durchgeführt wird.

Aufgrund der durchgehend ringförmigen und hierbei spaltfreien Auflage des Anschlussstutzens auf der Außenmantelkalottenform wird die eingebrachte Energie gleichmäßig verteilt. Dadurch wird eine exakte und fluiddichte Schweißnaht ohne die Notwendigkeit der Zuführung eines Zusatzmaterials erreicht.

Die Erfindung wird als Ausführungsbeispiel anhand von
- Fig. 1: schematische Schrägbilddarstellung einer Zylinderrohrbaugruppe
- Fig. 2: schematische Schrägbilddarstellung des Zylinderrohrs
- Fig. 3: schematische Schnittdarstellung entlang der Zylinderrohrachse
- Fig. 4: schematische Schnittdarstellung senkrecht zur Zylinderrohrachse
- Fig. 5: schematische Schnittdarstellung des Stanz- und Prägewerkzeugs näher erläutert.

Hierbei beziehen sich gleiche Bezugszeichen in den verschiedenen Figuren auf jeweils gleiche Merkmale oder Bauteile. Die Bezugszeichen werden in der Beschreibung auch dann verwandt, sofern sie in der betreffenden Figur nicht dargestellt sind.

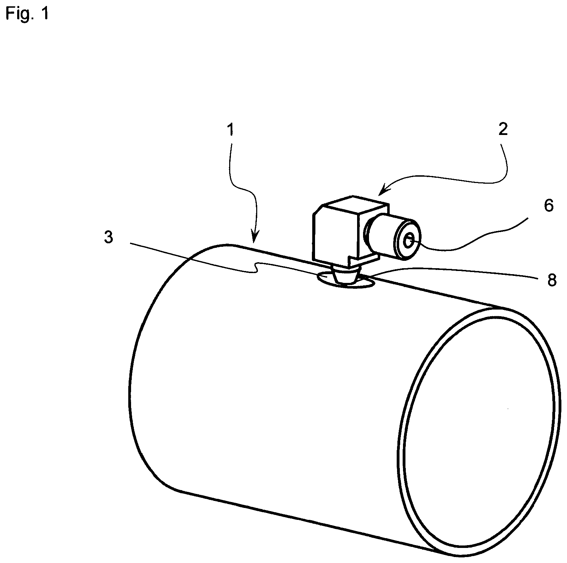

Die Fig. 1 zeigt eine schematische Schrägbilddarstellung der gesamten Zylinderrohrbaugruppe. Das Zylinderrohr 1 ist in Fig. 1 mit dem Anschlussstutzen 2 verbunden. Der Anschlussstutzen 2 ist im Bereich der Außenkalotte 3 mittels der Ringschweißnaht 8 stoffschlüssig verbunden.

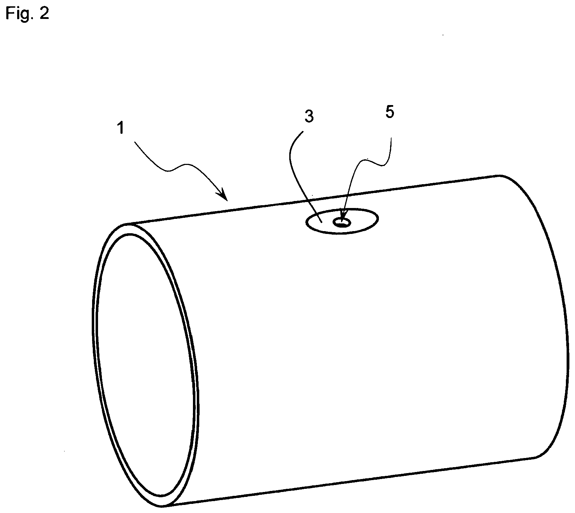

Die Fig. 2 zeigt in einer schematischen Schrägbilddarstellung das zum Fügen vorbereitete Zylinderrohr 1. Hier ist auf der Zylinderrohraußenmantelfläche eine kugelabschnittsförmige Außenkalotte 3 eingeprägt. Für den Druckmitteldurchfluss ist zudem die Anschlusslochung 5 eingestanzt.

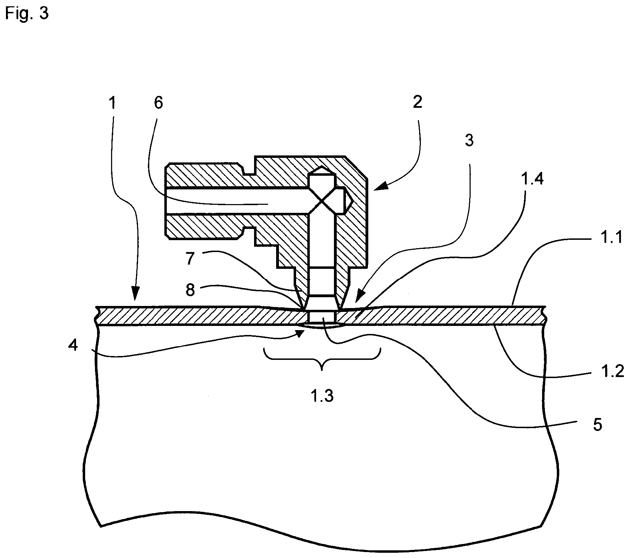

Die Fig. 3 zeigt in einer Schnittdarstellung, entlang der Zylinderrohrlängsachse geschnitten, die gesamte Zylinderrohrbaugruppe.

Im Bereich des Anschlussabschnitts 1.3 ist in das Zylinderrohr 1 an dem Zylinderrohraußenmantel 1.1 eine kugelabschnittsförmige Außenkalotte 3 eingeprägt. Gegenüberliegend ist an dem Zylinderrohrinnenmantel 1.2 die Innenkalotte 4 ebenfalls eine kugelabschnittsförmige Kontur in das Zylinderrohr 1 eingeprägt. Abhängig von der Eindringtiefe wird das Gefüge des Zylinderrohrmaterials um einen definierten Wert verdichtet. Das hat eine lokale Verfestigung des Materials zu Folge. Hierbei handelt es sich um die Gefügeverfestigungszone 1.4.

Gleichzeitig wird eine Anschlusslochung 5 eingestanzt, welche den Druckmitteldurchfluss bereitstellt.

Der Anschlussstutzen 2 weist für die Druckmitteldurchleitung den Druckmitteltubus 6 auf. Ferner weist der Anschlussstutzen 2 den Verbindungsabschnitt 7 mit einer ringförmigen Abschlusskontur auf. Hierbei handelt es sich um die ringförmige axiale Begrenzungskontur 7.1. Dieser Begrenzungskontur 7.1 in einer Fügeposition gegenüberliegend befindet sich die ringförmige Gegenringfläche 3.1 der Außenkalotte 3.

Der Anschlussstutzen ist auf die Außenmantelkalotte 3 aufgesetzt und durch Pressschweißen stoffschlüssig mittels der Ringschweißnaht 8 verbunden, die zugleich die Dichtebene für das Druckmittel ausbildet. Das Druckmittel kann dann über den Anschlussstutzen 2 durch die Anschlusslochung 5 in das Innere des Zylinderrohrs 1 strömen und umgekehrt.

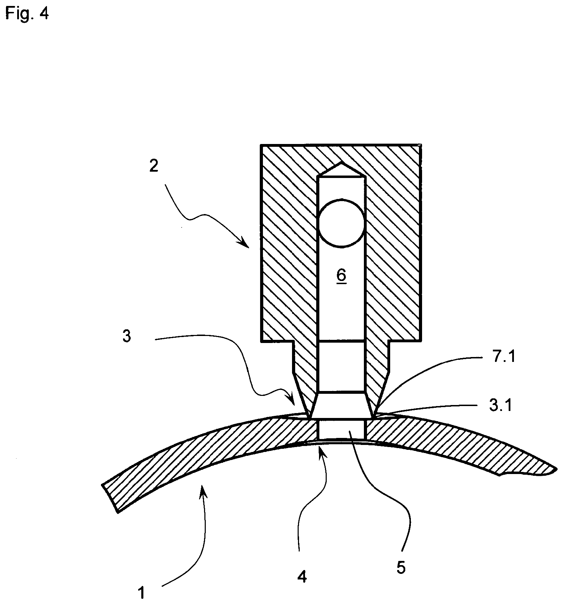

Die Fig. 4 zeigt in einer Schnittdarstellung, quer zur Zylinderrohrlängsachse geschnitten, die Zylinderrohrbaugruppe.

In Kombination mit Fig. 3 sind in Fig. 4 insbesondere die kugelabschnittsförmigen Konturen der Außenmantelkalotte 3 und der Innenmantelkalotte 4 abgebildet. Beim Fügen des Zylinderrohrs 1 mit dem Anschlussstutzen 2 im Verfahrensschritt c) liegen sich die ringförmige axiale Begrenzungskontur 7.1 des Anschlussstutzens 2 und die ringförmige Gegenringfläche 3.1 als ein Oberflächenabschnitt der kugelabschnittsförmigen konkaven Oberfläche der Außenkalotte 3 spaltfrei einander gegenüber. Auch bei einer Verkippung der Fügepartner 1, 2 zueinander mit einer großen Winkelabweichung ist durch die Form der Außenmantelkalotte 3 eine spaltfreie und nach der Verschweißung dichtende Auflage sichergestellt.

Beim anschließenden Pressschweißen im Verfahrensschritt d) wird demzufolge ein gleichmäßiger Energieeintrag und daraus resultierend eine druckmitteldichte stoffschlüssige Verbindung mittels der Ringschweißnaht 8 erreicht. Über die Anschlusslochung 5 und die anschließende Innenmantelkalotte 4 kann das Druckmittelfluid störfrei in das Innere des Zylinderrohrs 1 einströmen.

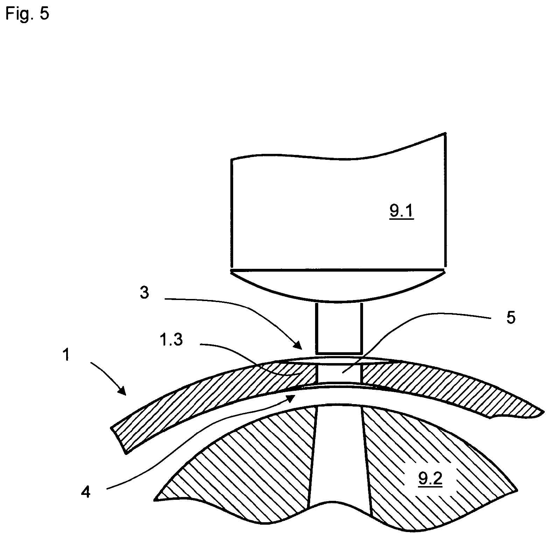

Die Fig. 5 zeigt in einer schematischen Schnittdarstellung das Stanz- und Prägewerkzeugs für das Verfahren zur Bearbeitung des Anschlussabschnittes 1.3 des Zylinderrohrs 1 für die nachfolgende Fügung des Anschlussstutzens 2.

Hierbei wird das im Verfahrensschritt a) bereitgestellte Zylinderrohr 1 auf einem Gegenstempel 9.2 positioniert. Der Stanz-Form-Stempel wird im Verfahrensschritt b) von der Außenseite des Zylinderrohrs 1 zugeführt. Der Stanz-Form-Stempel 9.1 besteht aus einem zylindrischen Stanzabschnitt, der an einem kugelabschnittförmigen Prägeabschnitt angeordnet ist. Demzufolge kann mit dem Stanz-Form-Stempel 9.1 die Anschlusslochung 5 in das Zylinderrohr 1 eingestanzt werden und es wird mit dem gleichen Pressenhub wegbegrenzt die Außenmantelkalotte 3 sowie zugleich die Innenmantelkalotte 4 eingeprägt.

Der Gegenstempel 9.2 hat in dem vorliegenden Ausführungsbeispiel ebenso eine kugelabschnittsförmige Prägekontur. Damit kann die Innenmantelkalotte 4 im gleichen Arbeitsschritt eingeprägt werden. Zudem besitzt der Gegenstempel 9.2 mittig eine konische Bohrung, die den Stanzbutzen und den zylindrischen Formabschnitt des Stanz-Form-Stempels 7 aufnimmt. Über diesen Werkzeugaufbau kann die gesamte notwendige Fügekontur am Zylinderrohr 1 mit nur einem Pressenhub hergestellt werden.

### Verwendete Bezugszeichen

- 1: Zylinderrohr
- 1.1: Zylinderrohraußenmantel
- 1.2: Zylinderinnenmantel
- 1.3: Anschlussabschnitt
- 1.4: Gefügeverfestigungszone
- 2: Anschlussstutzen
- 3: Außenmantelkalotte
- 3.1: ringförmige Gegenfläche
- 4: Innenmantelkalotte
- 5: Anschlusslochung
- 6: Druckmitteltubus
- 7: Verbindungsabschnitt
- 7.1: ringförmige axiale Begrenzungskontur
- 8: Ringschweißnaht
- 9.1: Stanz-Form-Stempel
- 9.2: Gegenstempel

## Patentansprüche

1. Zylinderrohrbaugruppe,
aufweisend ein Zylinderrohr (1) und einen Anschlussstutzen (2),
wobei das Zylinderrohr (1) einen Zylindergrundkörper und einen Anschlussabschnitt (1.3) aufweist,
wobei der Anschlussabschnitt (1.3) eine Außenmantelkalotte (3), eine Innenmantelkalotte (4), eine Gefügeverfestigungszone und eine Anschlusslochung (5) aufweist,
wobei die Außenmantelkalotte (3) an einem Zylinderrohraußenmantel (1.1) und die Innenmantelkalotte (4) an einem Zylinderrohrinnenmantel (1.2) angeordnet ist und wobei die Kalotten (3, 4) als kaltgeformte konkave Prägeformabschnitte ausgebildet sind,
wobei die Gefügeverfestigungszone (1.4) in einem Formungsbereich zwischen den Kalotten (3, 4) angeordnet ist,
wobei die Anschlusslochung (5) für einen Druckmitteldurchtritt eines Druckmittels und als Stanzlochung ausgebildet ist und die Kalotten (3, 4) durchsetzt und wobei die Gefügeverfestigungszone die Anschlusslochung (5) umschließt,
wobei der Anschlussstutzen (2) an dem Anschlussabschnitt (1.3) angeordnet ist, und einen Druckmitteltubus (6) und eine Verbindungsabschnitt aufweist, wobei der Druckmitteltubus (6) für eine Druckmittelleitung des Druckmittels ausgebildet ist,
wobei der Verbindungsabschnitt eine ringförmige axiale Begrenzungskontur (7.1) aufweist,
wobei die ringförmige axiale Begrenzungskontur (7.1) und eine ringförmige Gegenfläche (3.1) der Außenmantelkalotte (3) eine ringförmige Berührungskontaktfläche ausbilden,
wobei das Zylinderrohr (1) und der Anschlussstutzen (2) an der ringförmigen Berührungskontaktfläche mittels einer Ringschweißnaht (8) stoffschlüssig verbunden sind und die Ringschweißnaht (8) eine Dichtebene ausbildet und wobei der Druckmitteltubus (6) und die Anschlusslochung (5) einen gemeinsamen Druckmittelkanal ausbilden.

2. Zylinderrohrbaugruppe nach Anspruch 1,
**dadurch gekennzeichnet,**
**dass** die Zylinderrohrbaugruppe als Teil eines Arbeitszylinders ausgebildet ist.

3. Zylinderrohrbaugruppe nach einem der vorhergehenden Ansprüche, **dadurch gekennzeichnet,**
**dass** die Ringschweißnaht als Pressschweißnaht ausgebildet ist.

4. Zylinderrohrbaugruppe nach einem der vorhergehenden Ansprüche, **dadurch gekennzeichnet,**
**dass** die Ringschweißnaht schweißwerkstofffrei ausgebildet ist.

5. Zylinderrohrbaugruppe nach einem der vorhergehenden Ansprüche, **dadurch gekennzeichnet,**
**dass** die Außenmantelkalotte (3) als Kugeloberflächenabschnitt ausgebildet ist.

6. Zylinderrohrbaugruppe nach einem der vorhergehenden Ansprüche, **dadurch gekennzeichnet,**
**dass** die Innenmantelkalotte (4) als Dämpfungsdruckmittelkanal ausgebildet ist.

7. Verfahren zur Herstellung einer Zylinderrohrbaugruppe,
**dadurch gekennzeichnet,**
**dass** die Zylinderrohrbaugruppe nach einem der Ansprüche 1 bis 6 ausgebildet ist und folgende Verfahrensschritte aufweist:
a) Bereitstellen des Zylinderrohrs (1),
b) Stanzen der Anschlusslochung (5) und Formen der Kalotten durch Kaltumformung mittels eines Stanz-Form-Stempels (7) und eines Gegenstempels (8),
c) Positionieren des Anschlussstutzens (2) an der Außenkalotte (3) und Herstellen einer festen Lagebeziehung unter Ausbilden der ringförmigen Berührungskontaktfläche und Erhalten einer Vorbaugruppe,
d) Verschweißen des Zylinderrohrs (1) und des Anschlussstutzens (2) unter Herstellung der Ringschweißnaht.

8. Verfahren zur Herstellung einer Zylinderrohrbaugruppe Anspruch 7,
**dadurch gekennzeichnet,**
**dass** im Verfahrensschritt b) das Stanzen und Formen mittels eines als gehärtete Kugel ausgebildeten Gegenstempels (8) durchgeführt wird

9. Verfahren zur Herstellung einer Zylinderrohrbaugruppe nach Anspruch 7 oder 8,
**dadurch gekennzeichnet,**
**dass** im Verfahrensschritt d) das Verschweißen als Widerstands-Pressschweißen durchgeführt wird.

## Claims

1. A cylinder tube assembly group,
comprising a cylinder tube (1) and a connection piece (2),
wherein the cylinder tube (1) comprises a cylinder basic body and a connection portion (1.3),
wherein the connection portion (1.3) has an outer shell calotte (3), an inner shell calotte (4), a structural strengthening zone and a connecting borehole (5),
wherein the outer shell calotte (3) is arranged on a cylinder outer shell (1.1) and the inner shell calotte (4) is arranged on a cylinder inner shell (1.2), and wherein the calottes (3, 4) are formed as cold-formed concave embossing-form portions,
wherein the structural strengthening zone (1.4) is arranged in a forming region between the calottes (3, 4),
wherein the connecting borehole (5) is designed for a pressure medium passage of a pressure medium and as a punched borehole and passes through the calottes (3, 4), and wherein the structural strengthening zone encompasses the connecting borehole (5),
wherein the connection piece (2) is arranged at the connection portion (1.3) and comprises a pressure-medium tube (6) and a connection section, wherein the pressure-medium tube (6) is designed for a pressure-medium line of the pressure medium,
wherein the connection section has an annular axial boundary contour (7.1), wherein the annular axial boundary contour (7.1) and an annular mating surface (3.1) of the outer shell calotte (3) form an annular contact surface, wherein the cylinder tube (1) and the connection piece (2) are connected in a positive substance manner at the annular contact surface by means of a ring weld seam (8) and the ring weld seam (8) forms a sealing plane, and
wherein the pressure medium tube (6) and the connecting borehole (5) form a common pressure medium channel.

2. The cylinder tube assembly group according to claim 1,
**characterized in**
**that** the cylinder assembly group is designed as a part of a working cylinder.

3. The cylinder tube assembly group according to one of the preceding claims, **characterized in**
**that** the ring weld seam is designed as a press weld seam.

4. The cylinder tube assembly group according to one of the preceding claims, **characterized in**
**that** the ring weld seam is produced free of welding material.

5. The cylinder tube assembly group according to one of the preceding claims, **characterized in**
**that** the outer shell calotte (3) is designed as a spheric surface portion.

6. The cylinder tube assembly group according to one of the preceding claims, **characterized in**
**that** the inner shell calotte (4) is designed as a damping pressure medium channel.

7. A method for producing a cylinder tube assembly group,
**characterized in**
**that** the cylinder tube assembly group is designed according to one of the claims 1 to 6 and that it comprises the following process steps:
a) providing the cylinder tube (1),
b) punching the connecting borehole (5) and forming the calottes by cold forming using a punch-and-die stamp (7) and a counter stamp (8),
c) positioning the connection piece (2) at the outer calotte (3) and establishing a fixed positional relationship while forming the annular contact surface and obtaining a pre-assembly group,
d) welding the cylinder tube (1) and the connection piece (2) by producing the ring weld seam.

8. The method for producing a cylinder tube assembly group according to claim 7,
**characterized in**
**that** in process step b) punching and forming is carried out by means of a counter stamp (8) in the design of a hardened ball.

9. The method for producing a cylinder tube assembly group according to claim 7 or 8,
**characterized in**
**that** in process step d) welding is performed as a resistance-pressure welding process.

## Revendications

1. Ensemble de tube cylindrique,
comprenant un tube cylindrique (1) et une tubulure de raccordement (2), où le tube cylindrique (1) présente un corps de base cylindrique et une section de raccordement (1.3),
où la section de raccordement (1.3) présente une calotte d'enveloppe extérieure (3), une calotte d'enveloppe intérieure (4), une zone de renforcement de la structure et un trou de raccordement (5),
où la calotte d'enveloppe extérieure (3) est disposée sur une enveloppe extérieure (1.1) du tube cylindrique et la calotte d'enveloppe intérieure (4) est disposée sur une enveloppe intérieure (1.2) du tube cylindrique, et les calottes (3, 4) sont réalisées sous la forme de sections concaves d'estampage formées à froid,
où la zone de renforcement de la structure (1.4) est disposée dans une zone de moulage entre les calottes (3, 4),
où le trou de raccordement (5) est conçu pour un passage de fluide sous pression d'un fluide sous pression et comme un trou poinçonné et traverse les calottes (3, 4) et la zone de renforcement de la structure entoure le trou de raccordement (5),
où la tubulure de raccordement (2) est disposée sur la section de raccordement (1.3) et comprend un tube de fluide sous pression (6) et une section de liaison,
où le tube de fluide sous pression (6) est conçu pour une conduite du fluide sous pression,
où la section de liaison présente un contour de délimitation axiale annulaire (7.1),
où le contour de délimitation axial annulaire (7.1) et une surface opposée annulaire (3.1) de la calotte d'enveloppe extérieure (3) forment une surface de contact annulaire,
où le tube cylindrique (1) et la tubulure de raccordement (2) sont reliés par une liaison de matière sur la surface de contact annulaire au moyen d'une soudure annulaire (8) et la soudure annulaire (8) forme un plan d'étanchéité et
où le tube de fluide sous pression (6) et le trou de raccordement (5) forment un canal de fluide sous pression commun.

2. Ensemble de tube cylindrique selon la revendication 1
est **caractérisé en ce**
**que** l'ensemble de tube cylindrique est réalisé sous la forme d'un cylindre de travail.

3. Ensemble de tube cylindrique suivant une des revendications précédentes est **caractérisé en ce**
**que** la soudure annulaire est réalisée sous forme d'une soudure par pression.

4. Ensemble de tube cylindrique suivant une des revendications précédentes est **caractérisé en ce**
**que** la soudure annulaire est réalisé sans matériau de soudage.

5. Ensemble de tube cylindrique suivant une des revendications précédentes est **caractérisé en ce**
**que** la calotte d'enveloppe extérieure (3) est conçue comme section de surface sphérique.

6. Ensemble de tube cylindrique suivant une des revendications précédentes est **caractérisé en ce**
**que** la calotte d'enveloppe intérieure (4) est conçue comme canal de fluide de pression d'amortissement.

7. Procédé pour la fabrication d'un ensemble de tube cylindrique,
est **caractérisé en ce**
**que** l'ensemble de tube cylindrique est réalisé selon l'une des revendications 1 à 6 et présente les étapes de procédé suivantes:
a) mise à disposition du tube cylindrique (1),
b) poinçonnage du trou de raccordement (5) et formation des calottes par formage à froid au moyen d'un poinçon de formage (7) et d'un contre-poinçon (8),
c) positionnement de la tubulure de raccordement (2) sur la calotte extérieure (3) et réalisation d'une relation de position fixe en formant la surface de contact annulaire et en obtenant un pré-assemblage,
d) soudage du tube cylindrique (1) et de la tubulure de raccordement (2) en réalisant la soudure annulaire.

8. Procédé pour la fabrication de l'ensemble de tube cylindrique selon la revendication 7
est **caractérisé en ce**
**que**, dans l'étape de procédé b), le poinçonnage et le formage sont effectués au moyen d'un contre-poinçon (8) réalisé sous forme d'une bille durcie

9. Procédé pour la fabrication de l'ensemble de tube cylindrique selon la revendication 7 ou 8
est **caractérisé en ce**
**que**, dans l'étape de procédé d), le soudage est réalisé sous forme de soudage par résistance et par pression.
